(19) Europäisches Patentamt

European Patent Office

Office européen des brevets

(11) **EP 0 585 073 B1**

(12) **EUROPEAN PATENT SPECIFICATION**

(45) Date of publication and mention
of the grant of the patent:
**24.07.2002   Bulletin 2002/30**

(51) Int Cl.⁷: **H04N 1/387**, G06F 17/21

(21) Application number: **93306607.8**

(22) Date of filing: **20.08.1993**

(54) **Automatically changing text characteristics by repositioning word images**

Automatische Änderung der Eingenschaften eines Textes durch Umstellen von Wortbildern

Changement automatique des caractéristiques d'un texte par repositionnement des images des mots

(84) Designated Contracting States:
**DE FR GB**

(30) Priority:  **21.08.1992  US 933422**

(43) Date of publication of application:
**02.03.1994   Bulletin 1994/09**

(73) Proprietor: **XEROX CORPORATION**
**Rochester New York 14644 (US)**

(72) Inventor: **Card, Stuart K.**
**Los Altos, California 94022 (US)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 382 321          EP-A- 0 439 951**
**DE-A- 4 119 717          US-A- 5 126 858**

• **SYSTEMS & COMPUTERS IN JAPAN, vol.17,**
**no.3, March 1986, SILVER SPRING, MD, US**
**pages 35 - 46 SUENAGA 'Some techniques for**
**document and image preparation'**

## Description

The present invention relates to techniques that automatically create images that include text.

Bagley, et al., EP-A 434 930, describe techniques for editing text in an image by operating on character-size arrays. As shown and described in relation to Fig. 18, a line can be justified by spreading excess interword spacing equally among the interword spaces. Interword spaces can be found based on the assumption that any space between arrays that is greater than or equal to a threshold D is an interword space. But if the excess interword space within a line is too great, an error message is provided because the line cannot be justified. As noted, the technique in Fig. 18 could be elaborated to allow for movement of words between lines: If a line includes too much space to be justified, a word from a following line could be added if in the same paragraph and if not so long it will make the line too long to justify. Or if a line is too long, words could be moved to the next line until it can be justified. If a line is the last in a paragraph, it is not justified but its interword spaces are set at a default value such as D.

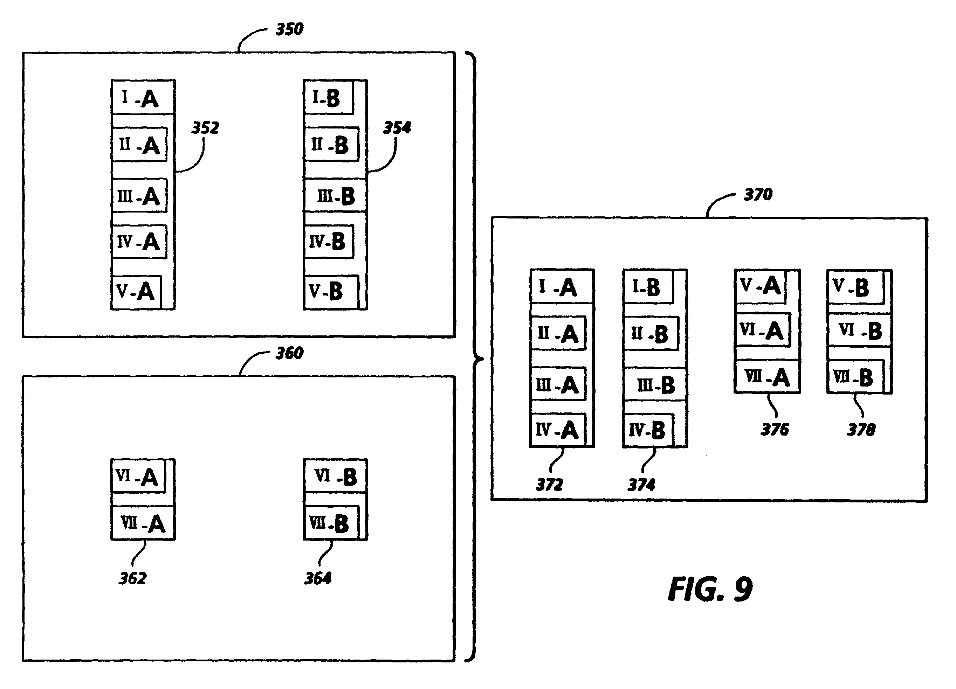

Bagley, et al., EP-A 439 951, describe techniques for changing characters in an image of text. As shown and described in relation to Figs 9 to 11, an incorrect word in an image is corrected by replacing it with a newly typeset word to obtain a modified version of the image. The newly typeset word is produced from characters in the image. As shown and described in relation to Fig. 11, interword spaces are adjusted to accommodate the new word.

Suenaga, Yasuhito, Some techniques for document and image preparation, Systems and Computers in Japan, Scripta Technica, Inc., Silver Springs, Maryland, USA, March 1986, no. 3, pages 35 to 46 describes a system receiving through facsimile a handwritten or printed text and graphic manuscript as a source of information together with auxiliary marks for correction and recognizes marks for performing editing text in the image domain.

US patent no. 5,126,858 discloses a picture image processing system which produces output picture images by executing picture image processing operations on input picture images with an input means furnishing instructions on machine operations, input picture information from an original document, and processed picture information for the input picture information, a recognizing means for the information mentioned above, a composite picture image generating means producing composite picture images by integration of the processed picture information into the input picture information recognized as mentioned above, and an output means yielding the output of such composite picture as mentioned above, and an output means yielding the output of such composite picture images on paper. The picture image processing system is capable of performing a variety of picture image editing and composing functions and a variety of functions for producing an output of composite picture images using different types of picture image output equipment and sending the output to multiple destinations for document distribution.

The invention deals with a basic problem in manipulation of text. The words in text may contain useful information, but other characteristics of the text may be problematic.

For example, if text appears on paper, the size of the paper or the arrangement of the text on the paper may be incompatible with the desired use. It is difficult to incorporate telephone listings or project memoranda on 216×279 mm (8½"×11") paper into a personal planning notebook designed to hold other sizes, such as 216×127 mm (8½"×5") or 171×121 mm (6¾"×4¾") paper. Such notebooks are marketed, for example, by Day Runner, Inc. and Day-Timers, Inc. Similarly, it is difficult to file legal-size documents in letter-size files.

Time-consuming steps could be taken to overcome such incompatibilities. For example, pages can be copied at different scales and duplexed, folded, cut into portions that can be pasted together, or otherwise made to fit. Unless such steps are appropriate, the incompatibilities can cause failure of paper management systems that cross formats, precluding, for example, a planning notebook that uses materials obtained in various formats that would be printed by laser printers.

It is an object to the present invention to provide a method for automatic document management that overcomes problems due to incompatibilities of paper sizes or arrangements of text on a page and, thus, improves prior art document management.

This object is solved by the method as claimed in independent claim 1, the medium claimed in claim 6 and by the system as claimed in independent claim 7. Preferred embodiments of the present invention are subject matters of dependent claims.

Each technique of the invention uses a first version of a text to produce a second version of the same text but with one or more words automatically repositioned so that the second version has a characteristic different than the first version. The characteristic could be a different page size; a different signature type or other difference in page order; a different layout or format of text, including shapes and positions of columns and spaces; a different scale; or a different orientation. Each of these characteristics can be changed by repositioning word images; to change some characteristics, scaling or another additional operation on word images is necessary.

In addition to alleviating the problem of incompatible formats of text on paper, the techniques can be used for other purposes. For example, the techniques could be used to produce a version of a text that has a wide margin for annotations. Or the techniques could be used to eliminate margins and other spaces, producing a version of a document that has fewer pages and is therefore smaller to store.

The techniques of the invention can be implemented by obtaining input image data and change data. The input image data define a first image that shows a first version of a text. The change data indicate a characteristic that is different than the first version. The input image data and change data can be used in automatically obtaining output image data defining a second image that shows a second version of the text that is different than the first version but has words in the same order as the first version.

To obtain the output image data, an image data item is obtained from the input image data. The image data item defines an image of a word in the first version of the text. The image data item is then used in obtaining the output image data so that the word has a different position than in the first version and so that the second version has the characteristic indicated by the change data.

Each technique can include additional features. For example, the image data item could be an image of a word alone, an image of an item in a table, or an image of a line of text. In addition to repositioning one or more words, the scale or orientation of each word could also be changed. Words could be positioned on several pages, and the pages could be positioned in a signature order on one or more sheets of paper. Words could be positioned in a different number of columns on each page

The technique can be implemented with a fax server or other machine that can transmit and receive data defining images. For example, the input image data can be transmitted to the fax server from a fax machine. The input image data can define a sheet indicating the characteristic to be changed. The fax server can use the input image data to obtain change data indicating the characteristic. Then the fax server can use the change data and the input image data to obtain the output image data. The fax server can transmit the output image data to the fax machine where it is printed.

Similarly, the technique could be implemented with a copying machine that can obtain and provide data defining images, such as through scanning circuitry and printing circuitry. Input data from user interface circuitry or input image data from the scanning circuitry can indicate the characteristic to be changed. The copying machine's processing circuitry can obtain change data indicating the characteristic. Then the processing circuitry can use the change data and the input image data to obtain the output image data, which it provides to the printing circuitry.

Finally, the technique could be implemented with a computer, such as a workstation or personal computer, that can transmit and receive data defining images through input/output devices, such as a printer and a scanner. Input data from an input device such as a keyboard and mouse can indicate a characteristic presented on a display; alternatively, input image data from the scanner can indicate the characteristic. In either case, the computer's central processing unit (CPU) can obtain change data indicating the characteristic. Then the CPU can use the change data and the input image data to obtain the output image data, which it provides to the printer or other image output device.

A method and system in accordance with the invention will now be described, by way of example, with reference to the accompanying drawings, in which:-

Fig. 1 is a schematic flow diagram showing two images of a text, with a word in the first image being repositioned to produce the second image

Fig. 2 is a flow chart showing general acts in automatic repositioning of a word as in Fig. 1.

Fig. 3 is a schematic block diagram showing a software product that can be accessed by a system to automatically reposition a word as in Fig. 2.

Fig. 4 is a schematic block diagram showing a fax server that can automatically reposition words to change a characteristic of text.

Fig. 5 is a schematic block diagram showing a digital copier with processing circuitry that can automatically reposition words to change a characteristic of text.

Fig. 6 is a schematic block diagram showing a computer with a CPU that can automatically reposition words to change a characteristic of text.

Fig. 7 is a schematic flow diagram showing how word images can be automatically changed in scale and repositioned to obtain a different version of a text.

Fig. 8 is a schematic flow diagram showing how word images from a document with one paper size can be repositioned to obtain a document with another paper size.

Fig. 9 is a schematic flow diagram showing how word images from partial tables can be repositioned to obtain a concatenated table with different spacings and with a different number of columns on each page.

Figs. 10A-10D show four different signature types.

A. General Features

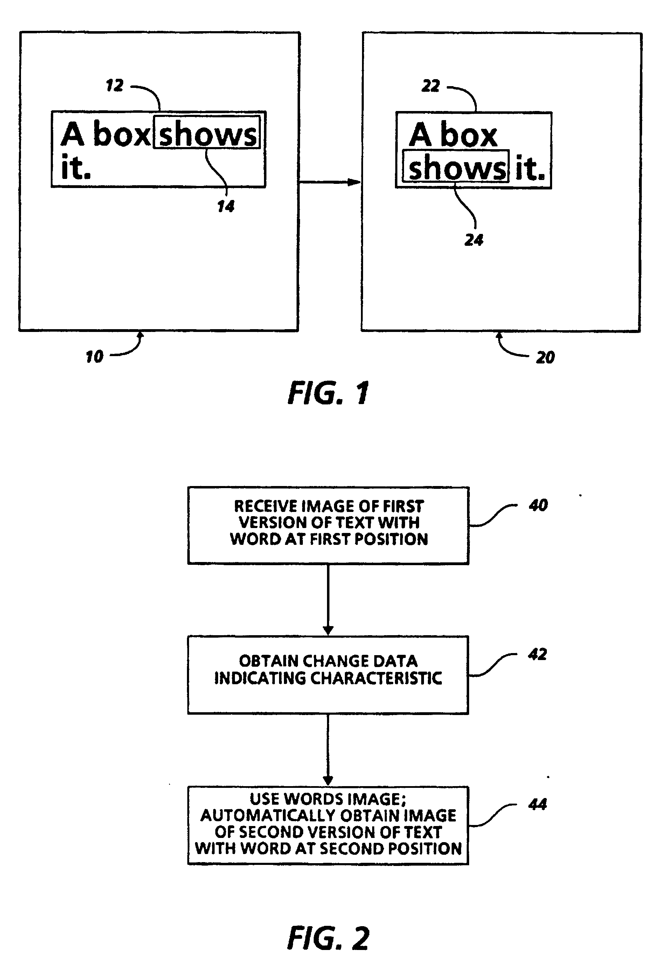

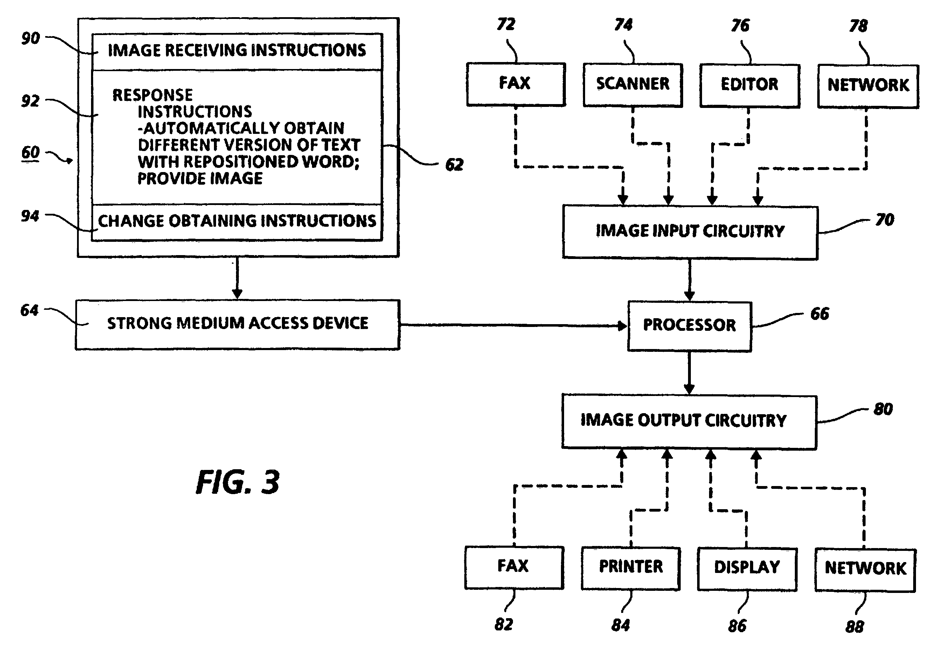

Figs. 1-3 illustrate general features of the invention. Fig. 1 is a schematic flow diagram showing how an image of a first version of a text can be used to automatically obtain an image of a second version of the text with a different characteristic by repositioning a word. Fig. 2 is a flow chart showing general acts in automatically obtaining an image of text with a different characteristic as in Fig. 1. Fig. 3 is a schematic block diagram showing a software product that can be accessed by a system to automatically obtain an image as in Fig. 2.

Image 10 in Fig. 1 includes a first version of the text, "A box shows it." Box 12 indicates the shape and position of the text in this version. Image 10 also includes a word "shows" within the text. Box 14 indicates the shape and position of the word. Boxes 12 and 14 need not be visible in image 10, but could be bounding boxes obtained by operating on data defining image 10.

Image 20 is obtained automatically by using data defining image 10 and change data indicating a characteristic of the text, such as a format. Image 20 includes a different version of the same text as image 10. In the version in image 20, box 22 indicates the shape and position of the text, which are different than indicated by box 12. The shape and position indicated by box 22 conform to the characteristic indicated by the change data. In order to change the text in this way, an image of the word in box 14 is repositioned to the position indicated by box 24. Therefore, the sequence of words in the text is the same in image 20 as in image 10, but the position of the word in box 24 relative to the other words is different. In short, the position of a word can be changed without changing the order of words in a text.

The act in box 40 in Fig. 2 receives data defining a first image set that shows a first version of text, like image 10 in Fig. 1. The act in box 42 obtains change data indicating a characteristic. The indicated characteristic could be a format as in Fig. 1 or it could be another characteristic that can be changed by changing positioning and, if necessary, scale of words. The act in box 44 uses data defining an image of a word and automatically obtains data defining a second image set that shows a second version of the text, like image 20 in Fig. 1. The second version has the characteristic indicated by the change data, in part because the word is moved from a first position in the first version to a second position in the second version.

Fig. 3 shows software product 60, an article of manufacture that can be used in a system that includes components like those shown in Fig. 3. Software product 60 includes data storage medium 62 that can be accessed by storage medium access device 64. Data storage medium 62 could, for example, be a magnetic medium such as a set of one or more floppy disks, an optical medium such as a set of one or more CD-ROMs, or any other appropriate medium for storing data.

Data storage medium 62 stores data that storage medium access device 64 can provide to processor 66. Processor 66 is connected for receiving data defining images from image input circuitry 70. The data could be obtained from facsimile (fax) machine 72; from scanner 74, which could be the scanner of a digital copier or an input/output device of a computer; from editor 76, which could be a forms editor or other interactive image editor controlled by user input devices such as a keyboard and mouse or a pen- or stylus-based input device; or from network 78, which could be a local area network or other network capable of transmitting data defining an image.

Processor 66 is also connected for providing data defining images to image output circuitry 80. The data could in turn be provided to fax machine 82, to printer 84, to display 86, or to network 88. Printer 84 could be the printer of a digital copier or an input/output device of a computer.

In addition to data storage medium 62, software product 60 includes data stored by storage medium 62. The stored data include data indicating image receiving instructions 90, which can be executed to perform the act in box 40 in Fig. 2. The stored data also include data indicating response instructions 92, which can be executed to automatically obtain data defining an image with a different version of a text in which a word is repositioned, as in box 44 in Fig. 2. The stored data can also include data indicating change obtaining instructions 94, which can be executed to obtain change data as in box 42 in Fig 2.

B. Implementations

The general features described above could be implemented in numerous ways on various machines to automatically change a number of characteristics of text.

1. Machines

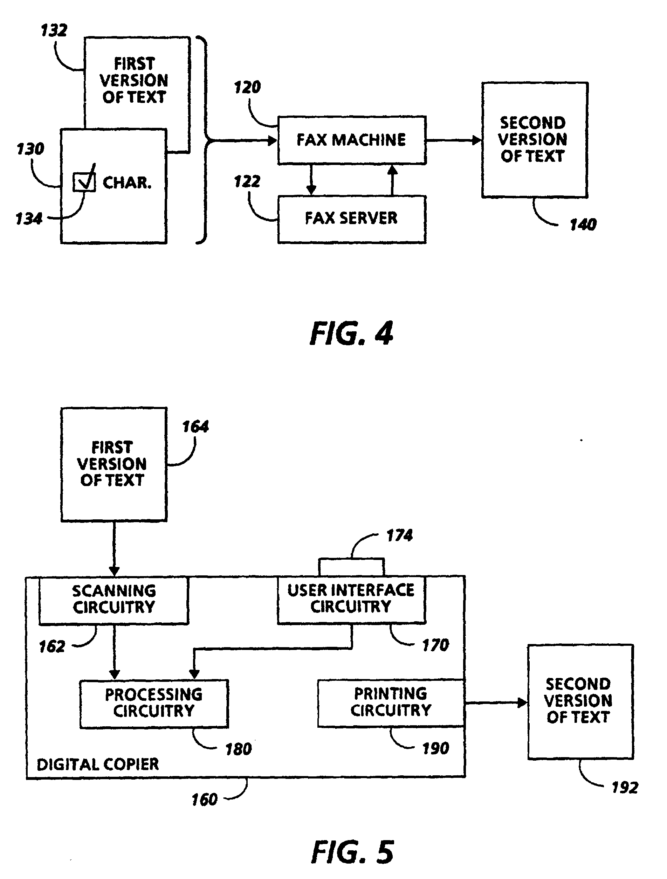

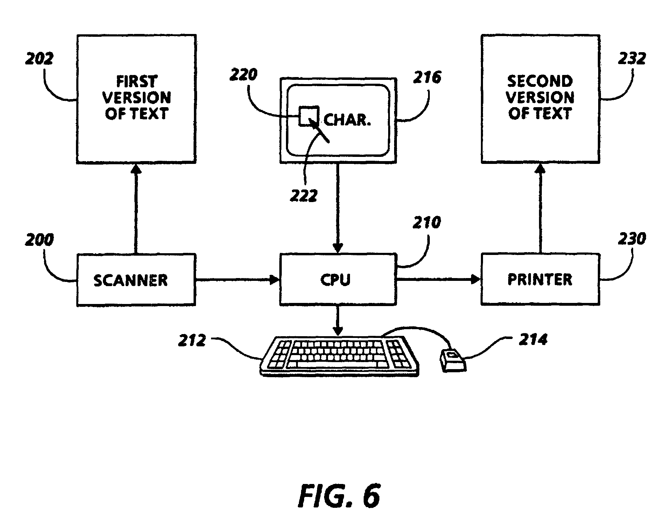

Figs. 4-6 illustrate three machines in which the invention can be implemented by modifying conventional components. Fig 4 shows a fax server implementation. Fig. 5 shows a digital copier implementation Fig. 6 shows a computer implementation.

In Fig. 4, fax machine 120 is used to transmit data defining an image set to fax server 122. The transmitted data define image 130 showing a form and image 132 showing a first version of a text. The form includes a field with check box 134 marked to indicate a characteristic.

In response to the data defining image 130, fax server 122 obtains change data indicating the characteristic indicated by the mark in check box 134. Then, fax server 122 uses the change data and data defining image 132 to automatically obtain data defining a second version of the text, changed to have the characteristic indicated by the change data. Fax server 122 transmits this data to fax machine 120, where it is printed to obtain image 140.

In Fig. 5, digital copier 160 includes scanning circuitry 162 that obtains data defining image 164 showing a first version of a text. User interface circuitry 170 includes touch sensing device 174, which can be a push button, a heat or pressure sensitive element, a capacitance sensing element, or other device for sensing a touching action. When a user touches device 174, user interface circuitry 170 provides touch data indicating that device 174 has been touched.

Processing circuitry 180 uses the touch data to obtain change data indicating a characteristic, and also receives data defining image 164 from scanning circuitry 162. Processing circuitry 180 uses the change data and the data defining image 164 to obtain data defining an image showing a second version of the text, changed to have the indicated characteristic. This data is provided to printing circuitry 190 for printing of image 192.

In Fig. 6, scanner 200 obtains data defining image 202 showing a first version of a text. This data is provided to CPU 210 of a computer, such as a workstation or personal computer. CPU 210 is connected for receiving data indicating user actions from keyboard 212 and mouse 214 and for providing data defining images to display 216. CPU provides an image that includes selectable unit 220 that can be selected to indicate a characteristic. Using mouse 216, a user can position pointer 222 and provide a signal indicating selection of selectable unit 220.

In response, CPU 210 obtains change data indicating the characteristic. CPU 210 then uses the change data and the data from scanner 200 to obtain data defining an image showing a second version of the text, changed to have the characteristic indicated by the change data. This data is provided to printer 230 for printing of image 232.

2. Changing Characteristics

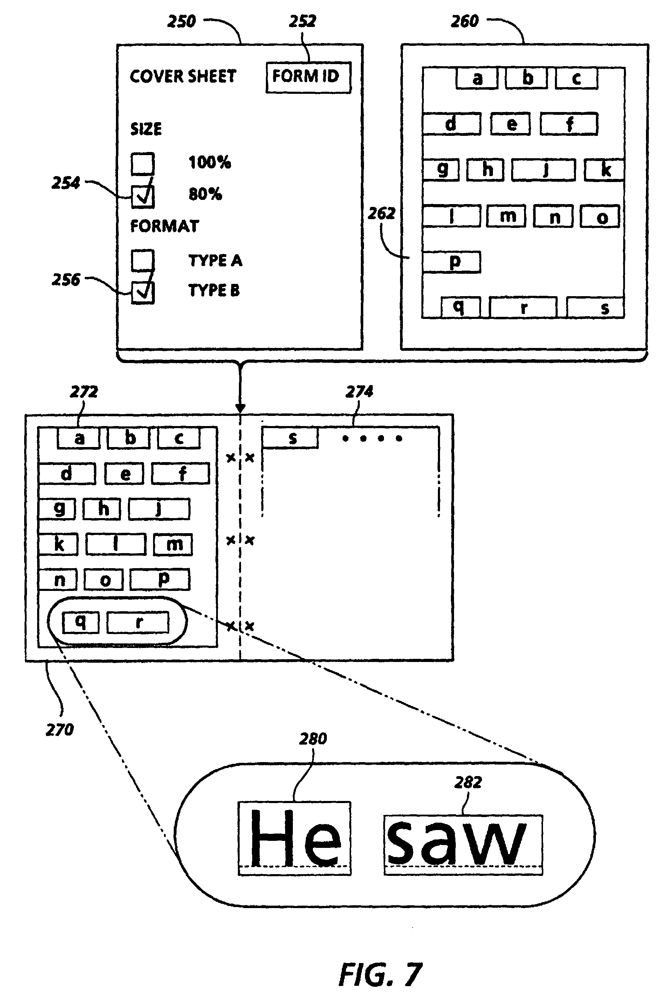

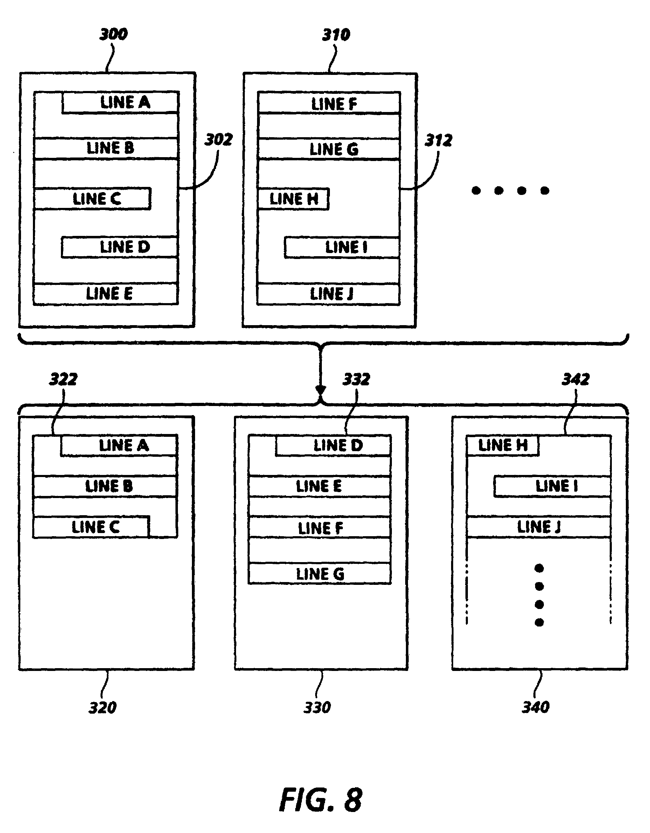

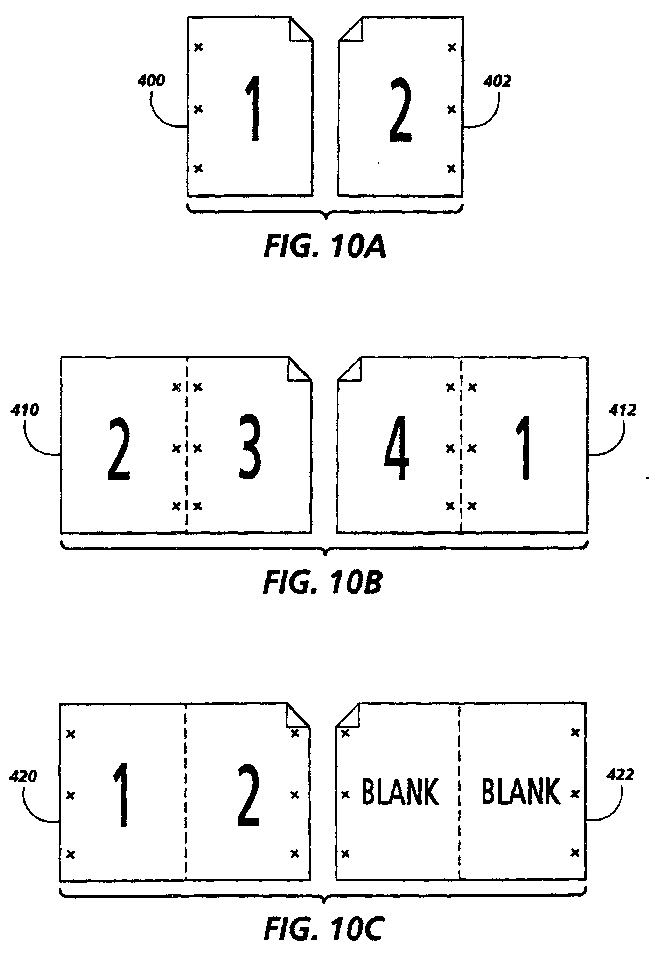

Figs. 7-10D illustrate ways in which characteristics can be changed to produce a different version of a text. Fig. 7 shows how text can be reformatted and reduced. Fig. 8 shows a change of page size. Fig. 9 shows a change in number of columns in a table. Figs. 10A-10D show alternative signature types.

Fig. 7 illustrates how a user can, starting with text in a letter-sized document, obtain a version that can be placed in a small notebook. In the illustrated technique, form 250, called a cover sheet, includes machine readable identifying information 252. A machine like those in Figs. 4-6 can read information 252 and obtain data identifying form 250. The form identifying data can be used to retrieve a stored description of fields in form 250. Or the form identifying data can include a description of the fields.

In the illustrated example, form 250 includes fields with check boxes that can be marked to indicate various characteristics. As shown, check box 254 has been marked to indicate a reduction to 80% of the original size, and check box 256 has been marked to indicate a format designated type B.

Document 260 includes a first version of text in a single column 262. As shown, the lines of text in column 262 extend parallel to the width of the page on which document 260 is printed, sometimes referred to as portrait orientation. Each word in the text is illustratively shown as a rectangular image labeled with a character.

In response to data defining an image showing form 250, a machine like one of those in Figs. 4-6 obtains data indicating that check box 254 is marked to indicate reduction to 80% and that check box 256 is marked to indicate type B format. The machine has stored format data defining type B format. Using the data obtained from form 250, data defining an image showing document 260, and the stored format data, the machine automatically produces data defining an image showing a changed version of the text in document 260. This data can then be printed to obtain document 270

Document 270 includes a second version of text in two columns 272 and 274. As shown, the words in the text have been reduced in size. As can be seen from a comparison of the words' labels, the words are in the same order as in document 260, with the words in column 272 preceding those in column 274 In addition, the lines of text in columns 272 and 274 extend parallel to the length of the page on which document 270 is printed, sometimes referred to as landscape orientation.

In order to position each word vertically, baselines of words can be aligned, as illustrated by words 280 and 282. Even though the two words "He" and "saw" are of different heights, their baselines are aligned so that they appear to be on the same line.

As shown by the dotted line and cross marks at the center of document 270, document 270 could be cut in half and holes could be punched in it so that it can be placed in a small notebook. In addition, if document 260 is part of a longer document, preceding and following text could be printed on the reverse side of document 270 so that when document 270 is cut in half, preceding text is on the reverse side of the page that shows column 272 and following text is on the reverse side of the page that shows column 274. It is very difficult to produce a similar result with a conventional copier.

Fig. 7 thus illustrates several distinct types of characteristics that are changed, including: (a) changes in word size; (b) changes in positions of words within pages; and (c) changes in positions of pages on paper.

(a) Word Size

In the example shown in Fig. 7, the mark in field 254 indicates a change in word size to 80% of original size.

This change in size can be implemented by operating on data defining an image of document 260 to obtain data defining each word's image, as described in copending E P - A - 0,543,593; as described there, data can also be obtained indicating the position of the baseline. Before obtaining each word's image, it could be determined whether a rotation of the image of document 260 is necessary to correct orientation. Each word's image can include any punctuation mark immediately preceding, following, under, or over the word. Data can be stored indicating the sequence of word images within the original document.

Data can also be obtained that indicate spacings, including spacings between words within sentences and between sentences, indentations, and spacings between lines within paragraphs and between paragraphs, such as by using techniques described in copending EP-A-0,526,196; the techniques described there could be applied to appropriate segments of an image, such as a line, a space between lines, or even a word, to obtain measurements of spacings. This data can be stored so that the first and last words of sentences and paragraphs and the positions and sizes of indentations can be identified. For text that is arranged in columns, spacings between columns can be obtained.

Then, an operation can be performed on the data defining each word's image to reduce or enlarge it to the requested size, using the techniques described in Scott et al., US-A 5,097,518, or other conventional techniques.

Changes in word image size might alternatively be made automatically based on page size. For example, the mark in field 256 in Fig. 7 indicates a format type in which each page is smaller than in the format in document 260. The invention could be implemented so that each word is scaled proportionally to the change in page size. Experimentation has shown, however, that a more attractive option in this case would be to reduce the scale of each word by less than the proportional change in page size. For example, it is often convenient to miniaturize pages for portability by reducing page size to 50% of the original, so that $216 \times 279$mm ($8\frac{1}{2}" \times 11"$) becomes $216 \times 127$mm ($8\frac{1}{2}" \times 5"$), a standard small notebook size, or A2 becomes A3; but in these cases, readability can be preserved by reducing word image size to 75% or 85% of the original. This differential scaling of pages and text is extremely difficult to do with a conventional copier.

Differential scaling might be extended to provide content-based scaling. For example, each category of document contents, including layout, text, figures, heading, footnotes, and so forth, could be scaled differentially to obtain a new composition that preserves readability. Automatic content-based scaling might be based on stored data defining simple category-based rules, such as, when scaling pages to 50% original size, scale word size to 80%, figures to 50%, headings to 75%, and footnotes to 100%. The rules could alternatively be context specific. Scaling of different categories could alternatively be controlled interactively by a user.

(b) Repositioning Words

In the example of Fig. 7, the pages and margins are scaled to 50% of the original while the words are scaled to 80%. Therefore, the word images must be repositioned to fit onto the relatively smaller lines of text on the smaller pages. In addition, changes other than scale may lead to repositioning of words. Fig. 8 illustrates how a page can be recomposed due to a change in paper size. Fig. 9 illustrates how a page can be recomposed due to a change in number of columns.

Page size and the positions of text boundaries in relation to page edges can be obtained based on the stored format data, which can indicate the scaling of pages and margins as in Fig. 7. Margins could instead be scaled at the same proportion as words, or at another appropriate proportion. Once the text boundary positions are obtained, the height and width of the text can be used to recompose the page.

In the example of Fig. 7, each page must be recomposed line by line, due to the differential scaling. As explained below, the order of operations is somewhat arbitrary, but the strategy is to begin at the top and proceed downward until the page is full.

First, the word images for the first line of text can be chosen, based on the widths of the scaled word images, the width of the text, the width of any indentations, and the minimum spacings between words within a sentence and between sentences. In Fig. 7, the words on the first line of column 272 are the words labeled "a", "b", and "c". The word labeled "d" would not fit on the first line.

The minimum spacing between word images can be obtained by scaling the smallest spacing between words in the original at the same proportion as the scaling of word images or in any other appropriate way; for example, if the word images are reduced to 80% of the original, the minimum word spacing can also be reduced to 80% of the smallest spacing found in the original. Indentations can similarly be scaled.

Then, the vertical position of the first line of text can be obtained using the baselines of the word images on the first line; baselines are illustrated for words 280 and 282 in Fig. 7. For example, the upper boundary of the word image that extends highest above its baseline can be at the upper boundary of the text. Data indicating the vertical position of the first line can indicate the vertical position of the first line's baseline, which is below the upper boundary of the text by the same distance that the upper boundary of the word that extends highest above its baseline.

Once each line's vertical position is obtained, the vertical position of the next line can be obtained by determining whether the next line is in the same paragraph or is the first line of the next paragraph. In Fig. 7, most of the lines are separated by the distance between lines within a paragraph, but the line that begins with the word labeled "q" is separated from the preceding line by the distance between paragraphs. Each of the distances between lines can be scaled in proportion to word size or in proportion to page size.

When the vertical position of a line is obtained, its word images can be chosen as for the first line. Then, the baselines of the word images can be used to determine whether the line can fit on the page. If the lower boundary of any of the word images on a line extends below the lower boundary of text, the page is already full and the line instead becomes the first line of the next page. In Fig. 7, for example, the lower boundary of the word labeled "s" extended below the lower boundary of text for column 272, so that it was included in the first line of column 274, which is only partially shown.

The vertical position of each word on each line of text can be obtained by positioning the word's baseline at the vertical position of the line. Vertical positioning of each word on a line can be done at any appropriate time once the line's word images have been chosen and the line's vertical position is obtained.

The horizontal position of each word on each line of text can be obtained by positioning the left boundary of the first word's image at the left boundary of the text or at an indentation from the left boundary, then spacing the words within a sentence by the minimum spacing and by spacing the last word of a sentence from the first word of the next sentence by twice the minimum spacing. To justify the line, spacings between words can be increased so that right boundary of the last word's image is at the right boundary of the text or at an indentation from the right boundary Horizontal positioning of each word on a line can be done at any appropriate time once the line's word images have been chosen

Fig. 8 shows an example in which the repositioning of words can be done more simply. In this example, the input image set includes a document on legal size paper ($216 \times 356$mm or $8\frac{1}{2}$" $\times$ 14"). A request has been made, such as through one of the techniques described in relation to Figs. 4-6 or through a form as described in Fig. 7, to print the document on letter size paper ($216 \times 279$mm or $8\frac{1}{2}$" $\times$ 11").

The input image set includes image 300 with text 302 and, immediately following image 300, image 310 with text 312. Texts 302 and 312 are part of a first version of text in portait orientation on legal size paper. Each line in the text is illustratively shown as a rectangular image labeled with the word "Line" and a character.

Using data defining images 300 and 310, the machine automatically produces data defining a set of images showing a second version of the text in images 300 and 310. This data can then be printed to obtain another document, which includes image 320 with text 322, image 330 with text 332, and image 340 with text 342. As can be seen from a comparison of the lines' labels, the lines are in the same order as in images 300 and 310, with the lines in image 320 preceding those in image 330, which in turn precede those in image 340.

The change illustrated in Fig. 8 can be implemented by operating on data defining images 300 and 310 to obtain data defining each line's image, as described in EP-A-0,434,930. Each line's image can include any punctuation marks in it. Data relating to each line's baseline can be obtained and stored as described above for words. Data can be stored indicating the sequence of line images within the original document.

Data can also be obtained that indicate spacings, including indentations and spacings between lines within paragraphs and between paragraphs, as described above in relation to Fig. 7. This data can be stored so that the first and last lines of paragraphs and the positions and sizes of indentations can be identified.

In the example of Fig. 8, the pages and margins need not be scaled-the only change is in paper length. Therefore, the line images, with the word images they contain, need only be repositioned to fit onto the shorter paper. Positions of text boundaries in relation to page edges can be obtained based on the data defining images 300 and 310 together with data indicating the size of the paper on which images 320, 330, and 340 are to be printed. Once the text boundary positions are obtained, the height and width of the text can be used to recompose the page.

In the example of Fig 8, each page can be recomposed by operating on each line image as a whole. The strategy is to begin at the top of each page and proceed downward until the page is full. Indentations and spacings between lines remain the same as in the original document, to the extent possible.

First, the line image for the first line of text is obtained. For image 320, this is Line A, the first line of image 300, so that its position in relation to the upper, left, and right text boundaries in image 320, including its indentation, is the same as in image 300. For images 330 and 340, the first lines, Line D and Line H, are not first lines in the original document, but the upper, left, and right boundaries of each line can similarly be used to position it.

Once each line's position is obtained, the position of the next line can be obtained in one of two ways. If the next line followed the previous line in the same image of the original document, its position relative to the previous line is the same as in the original document. But if the next line was the first line of a page in the original document, its position relative to the previous line can be obtained based on other information.

In Fig. 8, Line F from image 310 cannot be positioned in image 330 based on its position relative to the previous line because the previous line is in a different image, image 300. The data indicating that Line F is not the first line of a paragraph, data indicating spacings between baselines of lines within paragraphs in images 300 and 310, and data indicating the baselines of Line F and of the preceding line, Line E, can be used to obtain the vertical position of line F. Its horizontal position can be obtained by aligning its left end with the left end of Line E, since there is no indentation.

When the vertical position of a line is obtained, its lower boundary can be used to determine whether the line can fit on the page. If the lower boundary of the line extends below the lower boundary of text, the page is already full and the line instead becomes the first line of the next page. In Fig. 8 for example, the lower boundaries of Lines D and H extended below the lower boundary of text for images 320 and 330, respectively, so that each was included in the first line of the next image.

Fig. 9 shows another example of repositioning words. In this example, the input image set includes images 350 and 360, which show a first version of a text. The text includes two partial tables, each with two columns. Image 350 includes columns 352 and 354 and image 360 includes columns 362 and 364.

Each item in each column is illustratively shown as a rectangular image labeled with a roman numeral and a character indicating the left column ("A") or the right column ("B"). The two items on the same line of the table have the same roman numeral.

A request has been made, such as through one of the techniques described in relation to Figs. 4-6 or through a form as described in Fig. 7, to concatenate the partial tables from images 350 and 360 in a two column format. The request included information indicating that each partial table includes two columns on a page, so that the resulting table should have four columns altogether.

Using data defining images 350 and 360, the machine automatically produces data defining an image that shows a second version of the text in images 350 and 360. This data can then be printed to obtain image 370, which includes columns 372, 374, 376, and 378. As can be seen from a comparison of the items' labels, the lines of the table in image 370 are in the same order as in images 350 and 360, with the lines in columns 372 and 374 preceding those in columns 376 and 378

The change illustrated in Fig. 9 can be implemented by operating on data defining images 350 and 360 to obtain data defining each item's image, similar to the techniques described in relation to Figs. 7 and 8. For simplicity of illustration, the items in Fig. 9 are shown as having the same heights and as being aligned within each line; but data indicating the relative vertical positions of two items on the same line of a table could be obtained and stored; also, data relating to each item's baseline can be obtained and stored as described above for words and lines. Data can be stored indicating the sequence of item images within the original document and the number of lines in each partial table.

Data can also be obtained that indicate spacings, including spacings between lines within columns and spacings between columns, using the same techniques described above in relation to Fig. 7.

In the example of Fig. 9, the pages need not be scaled and there is no change in paper length. The item images, with the word images they contain, must be repositioned to fit into the concatenated table. Therefore, it is necessary to change the spacings between columns so that four columns can fit on a page rather than just two. The upper and lower boundaries of the text can be equal and the number of lines in the left pair of columns can be as close as possible to the number in the right pair.

In the example of Fig. 9, the concatenated table can be composed by operating on each item image as a whole. The strategy is to begin at the top of the table and proceed downward, with half, or the next integer greater than half, of the items in the left side and the remaining items in the right. Vertical spacings between items are such that items in the two sides of the table are aligned Once the vertical positions of all the items have been determined, the horizontal positions can be obtained by spacing the columns, with each item being aligned at the left boundary of its column.

First, the data indicating the number of lines in each partial table are used to obtain data indicating the total number of lines and the number of lines in each half of the concatenated table. In Fig. 9, there are seven lines total, so that the left half has four lines and the right half has three.

The spacings between baselines in the two partial tables are compared and the greater is chosen as the spacing between baselines of lines in the concatenated table, to ensure that lines of the concatenated table are sufficiently separated to avoid overlap. In Fig. 9, the spacings between baselines are substantially the same in both partial tables.

The spacing between baselines can be multiplied by the number of lines in the left half of the concatenated table to obtain an upper limit on the height of the concatenated table. This upper limit can be subtracted from the page height, and the result can be divided by two to obtain the upper boundary of the concatenated table, as illustrated in Fig. 9.

Vertical positions can then be assigned to the items on each line of the table, with the upper boundary of the first line being chosen so that none of the items on the first line on either side of the table extends above the upper boundary. The vertical position of each lower line can be obtained using the spacing between baselines.

The horizontal positions of the columns can be obtained based on the longest length of the items in the "A" columns and the longest length of the items in the "B" columns. These two longest lengths can be added together and doubled to get a lower limit on the width of the concatenated table. The difference between the width of the page and the lower limit is the amount of horizontal space available, and this space can be divided by positioning the columns such that the margins and the center space are greater than the spaces within the left and right sides of the concatenated table. Each item in each column can then be horizontally positioned at the left boundary of its column. In Fig. 9, the margins and center space are equal and the spaces within the left and right sides are half as large.

(c) Page Positioning

In Fig. 7, the mark in field 256 indicates a format type that can be obtained by positioning two pages on each side of a sheet of paper. Page positioning on paper therefore depends on page size, on paper size, and on whether pages are being duplexed.

If pages are printed on only one side of each sheet of paper, and if the page size exceeds one-half of the paper size, the pages should simply be positioned to facilitate any necessary trimming of excess paper. For example, each page could be positioned in the upper left-hand corner of its sheet of paper.

If pages are duplexed and each page exceeds one-half of the paper size, the page on each side of a sheet should be positioned toward the same corner of the paper--if the page on one side is at the upper left-hand corner, the page on the other side should be at the upper right-hand corner, and so forth. To facilitate trimming, the corners at which the pages are positioned should be fed out at the same orientation.

If pages are printed on only one side of a sheet of paper, and if the page size is one-half of the paper size or less, more than one page can be positioned on each sheet. Here again, the pages should be positioned to facilitate any necessary cutting of the paper and trimming of excess paper. The pages on each sheet should also be positioned to facilitate collation in correct page order.

If pages are duplexed and the page size is one-half of the paper size or less, a signature order can be used to facilitate cutting and collating a number of pages. Figs. 10A-10D illustrate a number of signature orders. In each example, the dashed lines indicate cut or fold lines and the small cross marks indicate where holes should be punched for mounting in a binder.

The signature order of Fig. 10A is appropriate where page size is equal to paper size. Pages 1 and 2 are duplexed on a single sheet which can be punched for mounting so that the left side of page 1 and the right side of page 2 are at the binding.

The signature orders of Figs. 10B-10D are appropriate where page size is one-half of paper size, and could be modified for smaller page sizes or larger paper sizes to facilitate trimming of excess paper.

In Fig. 10B, four pages are duplexed on a single sheet with two pages on each side By cutting along the dashed line, a user can obtain two separate smaller sheets, one with pages 1 and 2 and the other with pages 3 and 4. These sheets can be punched for mounting in a notebook so that the left sides of pages 1 and 3 and the right sides of pages 2 and 4 are at the binding.

In Fig. 10C, two pages are printed on one side of a sheet. By folding along the dashed line, a user obtains a doubled sheet of half size, with page 1 on one outer side, page 2 on the other, and blank pages on the inner sides. The doubled sheet can be punched for mounting so that the left side of page 1 and the right side of page 2 are at the binding.

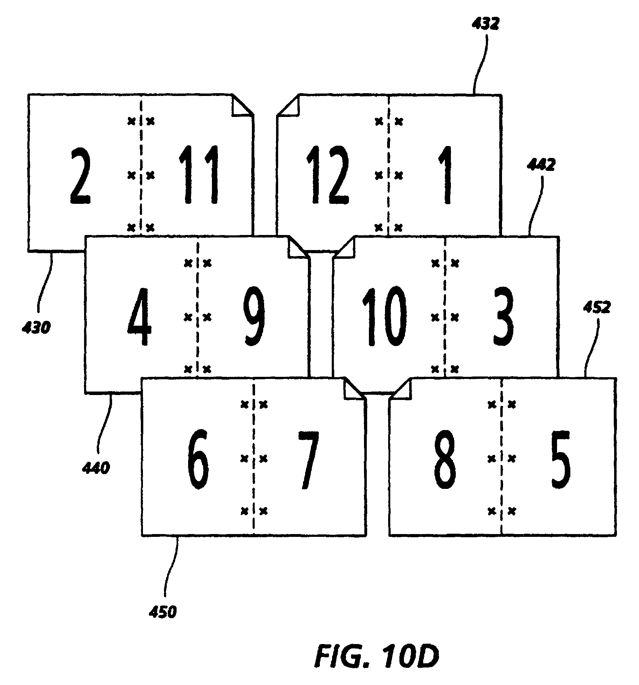

In Fig. 10D, 12 pages are duplexed on three sheets with two pages on each side of each sheet. By cutting the sheets along the dashed lines, a user can obtain six smaller sheets, collated into a signature booklet so that a sheet with pages 1 and 2 precedes a sheet with pages 3 and 4, and so forth. These sheets can be punched for mounting so that the left side of each odd numbered page and the right side of each even numbered page is at the binding.

In response to data defining an image of a document with a first version of text in one of the signature types illustrated in Figs. 10A-10B could be received together with a request to change from one signature type to another signature type. In response, a machine as described above in relation to Figs. 4-6 could provide data defining an image of a document with a second version of the text in the requested signature type.

Changing between signature types in this manner would be very complex if not impossible with a conventional copier. It would be difficult even with a computer-implemented text editor. In comparison, the above described technique would seem natural and simple to a user and would permit interaction between document systems with different formats.

Figs. 7-10D illustrate changes in a wide variety of characteristics of text. Figs. 7-9 illustrate changes in shape of text. Figs. 7-9 also illustrate changes that involve moving an image of a word from one segment of text to another, such as from one page to another or from one column to another. Fig. 7 illustrates changing orientation of an image of a word, from portrait orientation to landscape orientation. Fig. 7 also illustrates scaling images of words, changing page size, and differential scaling. Fig. 8 illustrates changing paper size. Fig. 9 illustrates changing positions of segments of text in order to move a line from one column to another and also in order to change spacings, specifically margins and spacings between columns. Fig. 9 also illustrates changing the number of columns on a page. Figs. 10A-10D illustrate reordering pages of text.

These and other similar characteristics can be changed in response to a wide variety of requests. Fig. 7 illustrates a request that includes information indicating a reduction in scale and a signature type. Other requests could include information indicating, for example, a shape, an orientation, a page size, a paper size, a position, a number of columns, a spacing parameter between lines or between paragraphs such as single spacing or double spacing, and so forth. For languages such as Japanese in which text can appear either in a vertical format or a horizontal format, a request could indicate vertical or horizontal.

A user could also provide a request indicating a selected part of a text and requesting differential scaling or deletion of the selected part.

C. Applications

The invention could be applied in many ways.

One application would allow insertion of a variety of documents into a planning notebook by making remote use of a fax server. For example, an executive could use a fax machine in an airport while changing planes. A letter-sized document or an article from a periodical could be reduced in scale, reformatted, and rearranged so that the resulting sheets could be folded and mounted in the executive's planning notebook. Or telephone listings or project memoranda could be reformatted and rearranged for mounting in the notebook. The fax server could be located in the executive's office or could be a publicly accessible service.

Another application would provide a digital copier that could be used to rearrange legal size documents to fit on letter size paper for filing. An office handling documents of both sizes could use the copier to rearrange legal size documents without reducing print size.

Another application would provide a digital copier that could be used to produce a large print version of an input document, independent of paper size, by rearranging words as necessary. The large print version could facilitate reading by the visually handicapped or by children.

Another application would provide automatic form filling.

D. Miscellaneous

The invention has been described in relation to implementations in which a first version of text on paper is used to automatically obtain a second version of the text printed on paper. The invention might also be implemented with images of text received and provided in other forms.

The invention has been described in relation to software implementations, but the invention might be implemented with specialized hardware.

The invention has been described in relation to implementations that operate on documents that include only text. The invention could readily be extended to documents that include graphics and other types of information. For example, the manner in which text flows around graphics could be modified by repositioning words using techniques described above. As noted above, different types of information could be scaled differentially.

The invention has been described in relation to implementations that operate on text in the English language The invention could readily be extended to text in other languages that follow the conventions of English relating to word positioning. The invention might also be extended to text in languages with other conventions, such as vertical lines, right-to-left lines, and so forth.

The invention has been described in relation to implementations in which it is unnecessary to recognize characters or words within a text. The invention might, however, be implemented together with operations that perform character or word recognition. For example, recognition might be performed on a word at the end of a line to determine its hyphenation points.

The invention has been described in relation to implementations that obtain a different version of a text that includes words in the same order as in the text, but the invention might be used in combination with operations that modify a text by changing words or changing the order of words in the text.

The invention has been described in relation to implementations that operate on printed text, but the invention might also be used to reformat handwritten text.

**Claims**

1. A method for modifying a first image set containing text, the text comprising a plurality of words (14, 24; a,..., z; 280, 282), table items or text lines, the text being formatted according to a first document style, the first document style being, without modification, applicable to each image of the first image set, the method comprising:

   receiving input image data (10) defining the first image set that shows a first version (132; 164; 202) of the text;

   obtaining change data describing a second document style being different from the first document style;

   automatically producing, using the input image data (10) and the change data, output image data (20) defining a second image set that shows a second version (140; 192; 232) of the text, the second version (140; 192; 232) being different from the first version (132; 164; 202), the step of automatically producing output image data (20) comprising:

   obtaining a plurality of image data items using the input image data (10), each of the image data items defining an image of a word, table item or text line and having a first position, scale and orientation within said first version (132; 164; 202), and

   assigning a second position, scale or orientation to each of the plurality of image data items within the second version (140; 192; 232), the second position, scale or orientation of each of the image data items being determined by the second document style, wherein the second position, scale or orientation of at least one image data item (14, 24) of the plurality of image data items is different from the first position, scale or orientation of said at least one image data item (14, 24) such that the text is formatted according to the second document style; and

outputting the output image data (20).

2. The method as claimed in claim 1 wherein:

the change data are provided separately from the image input data (10).

3. The method as claimed in claim 1 or 2 wherein:

the document style defines a size of an image, a number of columns (372, 374, 376, 378) in the image or a signature of the image set.

4. The method as claimed in one of claims 1 to 3 wherein:

the document style defines a size of image data items.

5. The method as claimed in one of claims 1 to 4 wherein:

the step of automatically producing output image data (20) further comprises:

obtaining an image data item from the plurality of image data items,

obtaining ratio data indicating a ratio between a size of the image data item in the first image set and a size of the image data item in the second image set,

scaling the image data item using the ratio data, and

inserting the scaled image data item into the output image data (20).

6. A computer-readable medium comprising computer-executable instructions for carrying out the steps of claim 1.

7. A system for modifying a first image set containing text, the text comprising a plurality of words (14, 24; a,..., z; 280, 282), table items or text lines, the text being formatted according to a first document style, the first document style being, without modification, applicable to each image of the first image set, the system comprising:

input image circuitry (70) for receiving input image data (10) defining the first image set that shows a first version (132; 164; 202) of the text;

means (170, 174; 212, 214) for obtaining change data describing a second document style being different from the first document style;

processing means (66, 210), comprising:

means for automatically producing, using the input image data (10) and the change data, output image data (20) defining a second image set that shows a second version (140; 192; 232) of the text, the second version (140; 192; 232) being different from the first version (132; 164; 202),

means for obtaining a plurality of image data item using the input image data (10), each of the image data items defining an image of a word, table item or text line and having a first position, scale and orientation within said first version (132; 164; 202), and

means for assigning a second position, scale or orientation to each of the plurality of image data items within the second version (140; 192; 232), the second position, scale or orientation of each of the image data items being determined by the second document style, wherein the second position, scale or orientation of at least one image data item (14, 24) of the plurality of image data items is different from the first position, scale or orientation of said at least one image data item (14, 24) such that the text is formatted according to the second document style; and

image output circuitry (80) for outputting the output image data (20).

8. The system as claimed in claim 7 wherein:

the change data are provided separately from the image input data (10).

9. The system as claimed in claim 7 or 8 wherein:

the document style defines a size of an image, a number of columns (372, 374, 376, 378) in the image or a signature of the image set.

10. The system as claimed in one of claims 7 to 9 wherein:

the document style defines a size of image data items.

11. The system as claimed in one of claims 7 to 10 wherein:

the processing means (66, 210) further comprises:

means for obtaining an image data item from the plurality of image data items,

means for obtaining ratio data indicating a ratio between a size of the image data item in the first image set and a size of the image data item in the second image set,

means for scaling the image data item using the ratio data, and

means for inserting the scaled image data item into the output image data (20).

## Patentansprüche

1. Verfahren für die Modifizierung eines ersten Bildsatzes, der Text enthält, wobei der Text umfasst: eine Vielzahl von Worten (14, 24; a, ..., z; 280, 282), Tabelleneinträgen oder Textzeilen, und der Text entsprechend einem ersten Dokumentstil formatiert ist, wobei der erste Dokumentstil ohne Modifikation auf jedes Bild des ersten Bildsatzes anwendbar ist, und das Verfahren umfasst:

- Empfangen von Eingabebilddaten (10), welche den ersten Bildsatz definieren, der eine erste Version (132; 164; 202) des Textes zeigt;

- Ermitteln von Veränderungsdaten, welche einen zweiten Dokumentstil beschreiben, der zum ersten Dokumentstil unterschiedlich ist;

- automatisches Produzieren von Ausgabebilddaten (20), die einen zweiten Bildsatz definieren, welcher eine zweite Version (140; 192; 232) des Textes zeigt, unter Verwendung der Eingabebilddaten (10) und der Veränderungsdaten; wobei die zweite Version (140; 192; 232) von der ersten Version (132; 164; 202) unterschiedlich ist, und der Schritt des automatischen Produzierens der Ausgabebilddaten (20) umfasst:

- Ermitteln einer Vielzahl von Bilddatenstükken unter Verwendung der Eingabebilddaten (10), wobei jedes der Bilddatenstücke ein Bild eines Wortes, eines Tabelleneintrags oder einer Textzeile definiert und eine erste Position, eine Skalierung oder eine Orientierung innerhalb der ersten Version (132; 164; 202) besitzt, und

- Zuweisen einer zweiten Position, Skalierung und Orientierung an jedes der Vielzahl von Bilddatenstücken innerhalb der zweiten Version (140; 192; 232), wobei die zweite Position, Skalierung oder Orientierung eines jeden der Bilddatenstücke durch den zweiten Dokumentstil bestimmt wird, wobei die zweite Position, Skalierung oder Orientierung von mindestens einem Bilddatenstück (14, 24) der Vielzahl von Bilddatenstükken zu der ersten Position, Skalierung oder Orientierung des mindestens einen Bilddatenstücks (14, 24) unterschiedlich ist, so dass der Text entsprechend dem zweiten Dokumentstil formatiert wird; und

- Ausgeben der Ausgabebilddaten (20).

2. Verfahren nach Anspruch 1, wobei:

- die Veränderungsdaten von den Eingabebilddaten (10) getrennt vorgesehen werden.

3. Verfahren nach Anspruch 1 oder 2, wobei:

- der Dokumentstil die Größe eines Bildes, die Anzahl der Spalten (372, 374, 376, 378) in dem Bild oder eine Signatur des Bildsatzes definiert.

4. Verfahren nach irgendeinem der Ansprüche 1 bis 3, wobei:

- der Dokumentstil die Größe von Bilddatenstükken definiert.

5. Verfahren nach irgendeinem der Ansprüche 1 bis 4, wobei:

- der Schritt des automatischen Produzierens von Ausgabebilddaten (20) ferner umfasst:

- Ermitteln eines Bilddatenstücks aus einer Vielzahl von Bilddatenstücken,

- Ermitteln von Verhältnisdaten, die ein Verhältnis zwischen einer Größe des Bilddatenstücks in dem ersten Bildsatz und einer Größe des Bilddatenstücks in dem zweiten Bildsatz bezeichnen,

- Skalieren des Bilddatenstücks unter Verwendung der Verhältnisdaten, und

- Einfügen des skalierten Bilddatenstücks in die Ausgabebilddaten (20).

6. Computer-lesbares Medium, das Computer-ausführbare Anweisungen für die Ausführung der Schritte von Anspruch 1 umfasst.

**7.** System für die Modifizierung eines ersten Bildsatzes, der Text enthält, wobei der Text umfasst: eine Vielzahl von Worten (14, 24; a, ..., z; 280, 282), Tabelleneinträgen oder Textzeilen, und der Text entsprechend einem ersten Dokumentstil formatiert ist, wobei der erste Dokumentstil ohne Modifikation auf jedes Bild des ersten Bildsatzes anwendbar ist, und das System umfasst:

- Bildeingabeschaltkreise (70) für den Empfang von Eingabebilddaten (10), welche den ersten Bildsatz definieren, der eine erste Version (132; 164; 202) des Textes zeigt;

- eine Einrichtung (170, 174; 212, 214) für das Ermitteln von Veränderungsdaten, welche einen zweiten Dokumentstil beschreiben, der zum ersten Dokumentstil unterschiedlich ist;

- eine Verarbeitungseinrichtung (66, 210), die umfasst:

  - eine Einrichtung für das automatische Produzieren von Ausgabebilddaten (20), die einen zweiten Bildsatz definieren, welcher eine zweite Version (140; 192; 232) des Textes zeigt, unter Verwendung der Eingabebilddaten (10) und der Veränderungsdaten; wobei die zweite Version (140; 192; 232) von der ersten Version (132; 164; 202) unterschiedlich ist,

  - eine Einrichtung für das Ermitteln einer Vielzahl von Bilddatenstücken unter Verwendung der Eingabebilddaten (10), wobei jedes der Bilddatenstücke ein Bild eines Wortes, eines Tabelleneintrags oder einer Textzeile definiert und eine erste Position, eine Skalierung und eine Orientierung innerhalb der ersten Version (132; 164; 202) besitzt, und

  - eine Einrichtung für das Zuweisen einer zweiten Position, Skalierung oder Orientierung an jedes der Vielzahl von Bilddatenstücken innerhalb der zweiten Version (140; 192; 232), wobei die zweite Position, Skalierung oder Orientierung eines jeden der Bilddatenstücke durch den zweiten Dokumentstil bestimmt wird, wobei die zweite Position, Skalierung oder Orientierung von mindestens einem Bilddatenstück (14, 24) der Vielzahl von Bilddatenstücken zu der ersten Position, Skalierung oder Orientierung des mindestens einen Bilddatenstücks (14, 24) unterschiedlich ist, so dass der Text entsprechend dem zweiten Dokumentstil formatiert wird; und

  - Bildausgabeschaltkreise (80) für das Ausgeben der Ausgabebilddaten (20).

**8.** System nach Anspruch 7, wobei:

- die Veränderungsdaten von den Eingabebilddaten (10) getrennt vorgesehen werden.

**9.** System nach Anspruch 7 oder 8, wobei:

- der Dokumentstil die Größe eines Bildes, die Anzahl der Spalten (372, 374, 376, 378) in dem Bild oder eine Signatur des Bildsatzes definiert.

**10.** System nach irgendeinem der Ansprüche 7 bis 9, wobei:

- der Dokumentstil die Größe von Bilddatenstükken definiert.

**11.** System nach irgendeinem der Ansprüche 7 bis 10, wobei:

- die Verarbeitungseinrichtung (66, 210) ferner umfasst:

  - eine Einrichtung für das Ermitteln eines Bilddatenstücks aus einer Vielzahl von Bilddatenstücken,

  - eine Einrichtung für das Ermitteln von Verhältnisdaten, die ein Verhältnis zwischen einer Größe des Bilddatenstücks in dem ersten Bildsatz und einer Größe des Bilddatenstücks in dem zweiten Bildsatz bezeichnen,

  - eine Einrichtung für das Skalieren des Bilddatenstücks unter Verwendung der Verhältnisdaten, und

  - eine Einrichtung für das Einfügen des skalierten Bilddatenstücks in die Ausgabebilddaten (20).

**Revendications**

**1.** Procédé pour modifier un premier ensemble d'image contenant du texte, le texte comprenant une pluralité de mots (14, 24 ; a, ..., z ; 280, 282), des éléments de tableau ou des lignes de texte, le texte étant formaté en conformité avec un premier style de document, le premier style de document étant, sans modification, applicable à chaque image du premier ensemble d'image, le procédé comprenant les étapes consistant à :

recevoir les données d'image d'entrée (10) définissant le premier ensemble d'image qui montre une première version (132 ; 164 ; 202) du texte ;

obtenir des données de changement décrivant un second style de document qui est différent du premier style de document ;

produire automatiquement, en utilisant les données d'image d'entrée (10) et les données de changement, les données d'image de sortie (20) définissant un second ensemble d'image qui montre une seconde version (140 ; 192 ; 232) du texte, la seconde version (140 ; 192 ; 232) étant différente de la première version (132 ; 164 ; 202), l'étape consistant à produire automatiquement les données d'image de sortie (20) comprenant les étapes consistant à :

obtenir une pluralité d'éléments de données d'image en utilisant les données d'image d'entrée (10), chacun des éléments de données d'image définissant une image d'un mot, d'un élément de tableau ou d'une ligne de texte ayant une première position mise à l'échelle et orientation à l'intérieur de ladite première version (132 ; 164 ; 202), et

affecter une seconde position, échelle ou orientation à chacun de la pluralité des éléments de données d'image à l'intérieur de la seconde version (140 ; 192 ; 232), la seconde position, échelle ou orientation de chacun des éléments de données d'image étant déterminé par le second style de document, dans lequel la seconde position, échelle ou orientation d'au moins un élément de données d'image (14, 24) de la pluralité des éléments de données d'image est différente de la première position, échelle ou orientation dudit au moins un élément de données d'image (14, 24) de sorte que le texte est formaté en conformité avec le second style de document ; et

sortir les données d'image de sortie (20).

2. Procédé selon la revendication 1, dans lequel :

les données de changement sont délivrées séparément des données d'image d'entrée (10).

3. Procédé selon la revendication 1 ou 2, dans lequel :

le style de document définit une dimension d'une image, un nombre de colonnes (372, 374, 376, 378) dans l'image ou une signature de l'ensemble d'image.

4. Procédé selon l'une quelconque des revendications 1 à 3, dans lequel :

le style de document définit une dimension d'éléments de données d'image.

5. Procédé selon l'une quelconque des revendications 1 à 4, dans lequel :

l'étape consistant à produire automatiquement les données d'image de sortie (20) comprend, en outre :

obtenir un élément de données d'image à partir de la pluralité des éléments de données d'image,

obtenir des données de rapport indiquant un rapport entre une dimension d'un élément de données d'image dans le premier ensemble d'image et une dimension de l'élément de données d'image dans le second ensemble d'image,

mettre à l'échelle l'élément de données d'image en utilisant les données de rapport, et

insérer l'élément de données d'image mis à l'échelle dans les données d'image de sortie (20).

6. Support lisible par ordinateur comprenant des instructions exécutables par l'ordinateur pour exécuter les étapes de la revendication 1.

7. Système pour modifier un premier ensemble d'image contenant du texte, le texte comprenant une pluralité de mots (14, 24 ; a, ..., z ; 280, 282), des éléments de tableau ou des lignes de texte, le texte étant formaté en conformité avec un premier style de document, le premier style de document étant, sans modification, applicable à chaque image du premier ensemble d'image, le système comprenant :

des circuits d'entrée d'image (70) pour recevoir les données d'image d'entrée (10) définissant le premier ensemble d'image qui montre une première version (132 ; 164 ; 202) du texte ;

un moyen (170, 174 ; 212, 214) pour obtenir des données de changement décrivant un second style de document qui est différent du premier style de document ;

un moyen de traitement (66, 210), comprenant :

un moyen pour produire automatiquement en utilisant les données d'image d'entrée (10) et les données de changement les données d'image de sortie (20) définissant un second ensemble d'image qui montre une seconde version (140 ; 192 ; 232) du texte, la seconde version (140 ; 192 ; 232) étant différente de la première version (132 ; 164 ; 202),

un moyen pour obtenir une pluralité d'éléments de données d'image en utilisant les données d'image d'entrée (10), chacun des éléments de données d'image définissant une image d'un mot, d'un élément d'un tableau ou d'une ligne de texte ayant une première position, échelle et orientation à l'intérieur de ladite première version (132 ; 164 ; 202), et

un moyen pour affecter une seconde position, échelle ou orientation à chacun de la pluralité des éléments de données d'image à l'intérieur de la seconde version (140 ; 192 ; 232), la seconde position, échelle orientation de chacun des éléments de données d'image étant déterminée par le second style de document, dans lequel la seconde position, échelle ou orientation d'au moins un élément de données d'image (14, 24) de la pluralité des éléments de données d'image est différente de la première position, échelle ou orientation dudit au moins un élément de données d'image (14, 24) de sorte que le texte est formaté en conformité avec le second style de document ; et

des circuits de sortie d'image (80) pour sortir les données d'image de sortie (20).

8. Système selon la revendication 7, dans lequel :

les données de changement sont délivrées séparément des données d'entrée d'image (10).

9. Système selon la revendication 7 ou 8, dans lequel :

le style de document définit une dimension d'une image, un nombre de colonnes (372, 374, 376, 378) dans l'image ou une signature de l'ensemble d'image.

10. Système selon l'une quelconque des revendications 7 à 9, dans lequel :

le style de document définit une dimension des éléments de données d'image.

11. Système selon l'une quelconque des revendications 7 à 10, dans lequel :

le moyen de traitement (66, 210) comprend :

un moyen pour obtenir un élément de données d'image d'entrée à partir de la pluralité des éléments de données d'image,

un moyen pour obtenir des données de rapport indiquant un rapport entre une dimension de l'élément de données d'image dans le premier ensemble d'image et une dimension de l'élément de données d'image dans le second ensemble d'image,

un moyen pour mettre à l'échelle l'élément de données d'image en utilisant les données de rapport, et

un moyen pour insérer l'élément de données d'image mis à l'échelle dans les données d'image de sortie (20).

## FIG. 1

A box shows it.

A box shows it.

## FIG. 2

RECEIVE IMAGE OF FIRST
VERSION OF TEXT WITH
WORD AT FIRST POSITION — 40

OBTAIN CHANGE DATA
INDICATING CHARACTERISTIC — 42

USE WORDS IMAGE;
AUTOMATICALLY OBTAIN IMAGE
OF SECOND VERSION OF TEXT
WITH WORD AT SECOND POSITION — 44

FIG. 3

Figure 3 block diagram components: FAX (72), SCANNER (74), EDITOR (76), NETWORK (78) connected to IMAGE INPUT CIRCUITRY (70); PROCESSOR (66); IMAGE OUTPUT CIRCUITRY (80) connected to FAX (82), PRINTER (84), DISPLAY (86), NETWORK (88). IMAGE RECEIVING INSTRUCTIONS (90); RESPONSE INSTRUCTIONS — AUTOMATICALLY OBTAIN DIFFERENT VERSION OF TEXT WITH REPOSITIONED WORD; PROVIDE IMAGE (92); CHANGE OBTAINING INSTRUCTIONS (94); program (60); STRONG MEDIUM ACCESS DEVICE (64); (62).

**FIG. 4**

**FIG. 5**

**FIG. 6**

FIG. 7

FIG. 8

21

**FIG. 9**

*FIG. 10A*

*FIG. 10B*

*FIG. 10C*

**FIG. 10D**